Europäisches Patentamt

**European Patent Office**

**Office européen des brevets**

(11) Numéro de publication: **0 005 108**
A2

(12) # DEMANDE DE BREVET EUROPEEN

(21) Numéro de dépôt: **79400240.2**

(22) Date de dépôt: **12.04.79**

(51) Int. Cl.²: **H 02 J 11/00**
**G 05 F 1/44**

(30) Priorité: **13.04.78 CA 301090**

(43) Date de publication de la demande:
**31.10.79 Bulletin 79 22**

(84) Etats Contractants Désignés:
**DE FR GB IT SE**

(71) Demandeur: **Société dite : HYDRO-QUEBEC**
**75 Ouest, Boulevard Dorchester**
**Montreal Québec(CA)**

(72) Inventeur: **Berthiaume, Raymond**
**127, rue de Poitiers Ste-Julie**
**Varennes Province du Québec JOL 2CO(CA)**

(74) Mandataire: **Rodhain, Claude**
**30, rue La Boétie**
**F-75008 Paris(FR)**

(54) **Installation et procédé d'alimentation de balises à lampes incandescentes.**

(57) La présente invention a trait à l'alimentation de balises à lampes incandescentes par l'énergie extraite par couplage capacitif d'une section isolée du fil de garde d'une ligne de transport d'énergie. L'installation d'alimentation comporte un dispositif de transformation de l'énergie du fil de garde en un courant alternatif qui alimente au moins une des lampes incandescentes et un circuit de régulation monté en dérivation sur le dispositif de transformation de sorte à contrôler le débit du courant à travers les lampes. La régulation du courant se fait à l'aide d'un circuit de commutation dont le temps de commutation est réglé à l'aide d'un circuit de contrôle. En outre, un circuit intégrateur gouverne le temps de commutation du circuit de commutation alors qu'un circuit comparateur assure la formation d'une forme d'ondes symétriques à l'entrée de ce circuit de commutation, les circuits intégrateur et comparateur formant le circuit de contrôle du temps de commutation.

FIG. 1

0005108

La présente invention concerne une installation d'alimentation de balises à lampes incandescentes à partir d'une source d'énergie provenant d'une section isolée du fil de garde d'une ligne de transport d'énergie.

L'usage de balises à lampes incandescentes pour indiquer la position des pilônes qui supportent les faisceaux de conducteur d'une ligne de transport d'énergie est connu depuis longtemps. Ces balises, qui sont fixées aux pilônes, ont pour but non seulement d'indiquer aux pilotes d'avion la présence d'un pilône, mais également servent de points de repères pour les équipes d'entretien et de dépannage. Jusqu'ici, ces balises ont été alimentées par des lignes de distribution secondaire ou par des groupes électrogènes dans les endroits les plus éloignés. L'une ou l'autre de ces formes d'alimentation s'avère toutefois très dispendieuse en raison des coûts d'installation et d'entretien et également peu fiable.

Pour contrer ces désavantages afférents aux installations d'alimentation conventionnelles, la présente invention propose une installation qui permet l'alimentation des balises incandescentes directement du fil de garde de la ligne de transport d'énergie.

Le fil de garde est ce conducteur accroché à la pointe des pilônes et qui sert à protéger les faisceaux de conducteurs de la ligne de transport contre la foudre. Ce fil est normalement relié à la terre et n'est pas utilisé au transport de l'énergie électrique proprement dit. Toutefois, en raison de sa proximité des faisceaux de conducteur à haute tension, une certaine quantité d'énergie y est induite de façon capacitive. En isolant une section de longueur prédéterminée du fil de garde, il est possible de récupérer l'énergie qui est induite, sans pour autant aliéner la fonction de protection du fil de garde. Pour ce faire, la présente invention préconise une installation d'alimentation avec régulation de la puissance fournie aux balises incandescentes, au moyen d'un ensemble électronique d'entretien minime, de grande fiabilité et relativement peu coûteux.

De façon plus spécifique, la présente invention réside en une installation d'alimentation de balises à lampes incandescentes par l'énergie induite par couplage capacitif dans une

...

section isolée d'un fil de garde d'une ligne de transport d'énergie, comportant un dispositif de transformation de l'énergie induite dans le fil de garde en courant alternatif et un circuit de commutation monté en dérivation sur ledit dispositif de transformation pour contrôler le débit dudit courant alternatif alimentant au moins une lampe incandescente.

La présente invention est également relative à une méthode d'alimentation mise en oeuvre par l'installation décrite ci-haut.

Un mode de réalisation préféré de la présente invention sera décrit ci-après avec référence aux dessins annexés, dans lesquels :

- la figure 1 illustre un schéma bloc de l'installation d'alimentation avec régulation par commutation shunt de balises à lampes incandescentes ;

- la figure 2 montre le schéma détaillé de l'installation d'alimentation de la fig. 1.

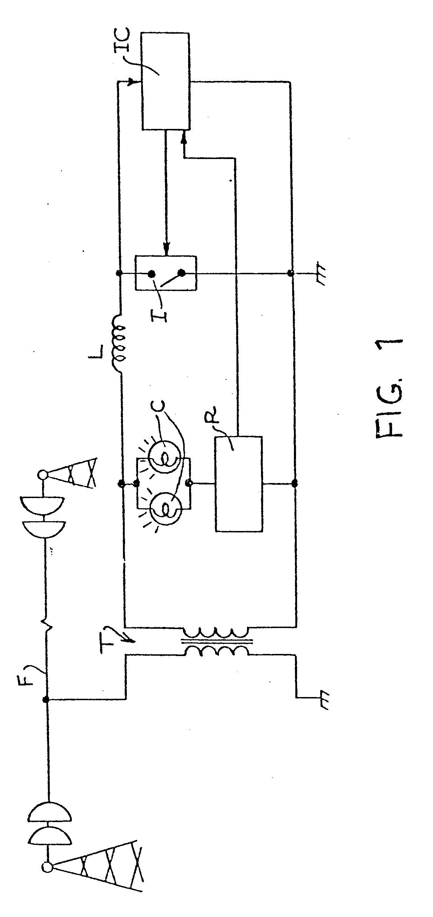

La figure 1 présente de façon schématique l'installation d'alimentation par fil de garde de balises incandescentes. Le primaire du transformateur abaisseur de tension T a son primaire raccordé entre la section isolée du fil de garde F et la masse et génère au secondaire un courant qui alimente les lampes incandescentes C, lesquelles sont reliées en série à un détecteur de courant R. La puissance débitée à travers les lampes incandescentes C est régularisée par un circuit de commutation shunt I qui est commandé par le circuit de contrôle IC. Ce circuit de contrôle est constitué d'une partie comparateur et d'une partie intégrateur. En outre, une inductance de lissage L est reliée en série avec le commutateur I afin de pallier aux brusques variations de courant dans ce commutateur.

En fonctionnement normal, le courant fourni par le secondaire du transformateur T passe librement dans le circuit des lampes incandescentes C lorsque le commutateur I est en position ouverte. Lorsque ce commutateur est fermé par le circuit de contrôle IC, il forme un court-circuit au travers le secondaire du transformateur, ce qui a pour effet de dériver à la masse toute l'énergie comparateur atteint une tension de seuil prédéterminée. Le condensateur $C_3$ branché en parallèle avec le diac $D_2$ joue le rôle de filtre pour les transitoires et détermine avec la résistance $R_4$ le temps de conduction du diac $D_2$. La résistance $R_4$ en série avec le diac $D_2$ délimite le courant d'entrée. Lorsque $D_2$ devient conducteur, il court-circuite les bornes positives et négatives du pont $BR_3$ et la tension en E apparaît à la borne F du pont. Une impulsion amorce alors la gâchette du triac TI qui devient conducteur, court-circuitant ainsi les lampes incandescentes C et le détecteur de courant, pour dériver à la masse l'énergie extraite du fil de garde par le transformateur-abaisseur T. L'inductance de lissage L, branchée entre le triac TI et la masse, empêche les changements brusques du courant et protège le secondaire du transformateur-abaisseur ainsi que le thyristor lui-même contre les tensions crêtes. La résistance $R_5$ sert à limiter l'alimentation en courant de la gâchette du triac TI alors que l'élément MOV en parallèle avec le triac joue le rôle d'élément de protection de surtension et se comporte comme une diode Zener à double polarité. La résistance $R_6$ connectée entre une des électrodes du triac et sa gâchette y assure un courant nul avant la mise en conduction de ce triac. Au moment du passage à zéro de la tension au secondaire du transformateur T, le triac TI retourne à son état de non-conduction.

Au début de la demi-alternance négative suivante, le triac TI demeure non-conducteur et les lampes incandescentes C sont à nouveau alimentées pour une durée déterminée par le temps de charge du condensateur $C_2$. Une fois le condensateur $C_2$ chargé à une tension prédéterminée par le circuit comparateur, le triac TI entre à nouveau en conduction pour limiter le courant débité dans les lampes incandescentes C.

Ainsi, durant chaque demi-alternance positive ou négative, le triac TI ,lorsqu'amorcé, est utilisé pour régulariser l'énergie à travers les lampes incandescentes C en court-circuitant le secondaire du transformateur-abaisseur T, ce qui a pour effet de délimiter la puissance délivrée aux lampes incandescentes C.

Dans le cas où les lumières incandescentes C sont soutirée du fil de garde, réduisant ici à zéro le courant à travers les lampes C et le détecteur R.

En outre, lorsque les lampes incandescentes C sont inopérantes, le détecteur de courant R qui est alors circuit-ouvert, agit au niveau du circuit de contrôle IC, de sorte à avancer le temps de commutation du circuit I, et ce à chacune des demi-alternances du courant de la source. L'avance du temps de commutation du circuit I a pour effet de dériver à la masse toute l'énergie provenant de la source fil de garde F.

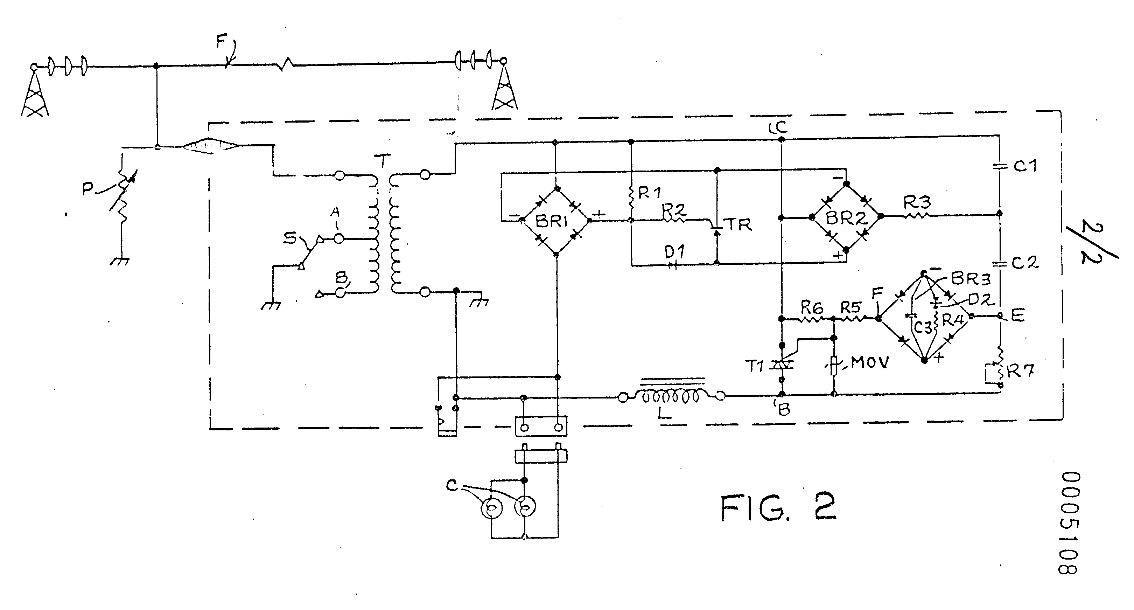

La figure 2 illustre de façon détaillée l'installation d'alimentation de balises incandescentes avec régulation par commutation shunt montré à la fig. 1. Cette régulation est réalisée de la façon suivante. Au début de la première demi-alternance positive, le courant fourni par le secondaire du transformateur T passe par le pont de diodes $BR_1$ et la résistance $R_2$ pour alimenter la gâchette du thyristor TR qui devient conducteur. Le thyristor TR étant conducteur, les ponts de diodes $BR_1$ et $BR_2$ ainsi que le condensateur $C_1$, tous branchés en parallèle avec ce thyristor, sont court-circuités de sorte que l'alimentation des lampes incandescentes C se fait à travers la boucle formée du pont $BR_1$, la diode $D_1$, le thyristor TR et la borne négative du pont $BR_1$.

La régulation de la puissance débitée aux lampes incandescentes C s'effectue à l'aide d'un circuit de commutation relié aux bornes B-C, à travers les enroulements secondaires du transformateur court-circuitant ainsi des lampes incandescentes C du circuit de détection de courant formé des ponts $BR_1$ et $BR_2$ et des éléments associés. Le circuit de commutation est formé d'un thyristor bidirectionnel TI ou triac, d'un MOV et des résistances $R_5$ et $R_6$. La mise à feu du triac TI est commandée par un circuit de contrôle qui comprend un intégrateur formé de la résistance variable $R_7$ et du condensateur $C_2$ et d'un comparateur constitué du pont de diodes $BR_3$, du diac $D_2$, de la résistance $R_4$ et du condensateur $C_3$.

Durant la demi-alternance positive, le condensateur $C_2$ du circuit intégrateur se charge à une tension déterminée par le diac $D_2$ qui devient conducteur lorsque la tension à la borne E du

inopérantes, c'est-à-dire lorsqu'elles constituent un circuit ouvert, aucun courant ne circule alors à travers les ponts de diodes $BR_1$ et $BR_2$ du détecteur de courant, de sorte que le thyristor TR demeure bloqué. En ce cas, le circuit intégrateur est formé par les condensateurs $C_1$ et $C_2$ en série et la résistance variable $R_7$ dont la valeur est ajustée selon la longueur de la section du fil de garde isolé. L'insertion du condensateur $C_1$ a pour effet de diminuer la constante de temps du circuit de mise à feu du thyristor TI, laquelle est avancée dans le temps. La valeur du condensateur $C_1$ est choisie de sorte à enclencher le triac TI au début de chaque demi-alternance de façon à dériver à la masse la presque totalité de l'énergie provenant du fil de garde.

En outre, il est prévu de relier le fil de garde à la masse par l'intermédiaire d'un parafoudre P, ce afin d'assurer le rôle d'élément protecteur de la ligne de transport d'énergie du fil de garde. Egalement, selon la longueur isolée du fil de garde, on règle le nombre de spires que devra comporter l'enroulement primaire du transformateur abaisseur T en mettant le sélecteur S soit en position A ou en position B. la position A reflétant une longueur de fil de garde isolée maximum

Il est entendu que des modifications pourront être apportées aux modes de réalisation décrits ci-haut sans affecter l'idée inventive de l'installation d'alimentation avec régulation par commutation shunt dont la portée n'est limitée que par les revendications qui suivent.

<u>R E V E N D I C A T I O N S</u>

1°/- Installation d'alimentation de balises à lampes incandescentes par l'énergie capacitive extraite d'une section isolée du fil de garde d'une ligne de transport d'énergie caractérisée par un moyen de transformation de ladite énergie du fil de garde pour alimenter au moins une desdites lampes incandescentes en courant alternatif et par des moyens de régulation montés en dérivation sur ledit moyen de transformation pour contrôler le débit dudit courant à travers ladite lampe incandescente.

2°/- Installation d'alimentation selon la revendication 1, caractérisée en ce que lesdits moyens de régulation comportent un circuit de commutation pour régulariser ledit débit de courant et un circuit de contrôle relié audit circuit de commutation pour en commander le temps de commutation.

3°/- Installation d'alimentation selon la revendication 1, caractériséeen ce que ledit moyen de transformation comprend un transformateur-abaisseur de tension.

4°/- Installation d'alimentation selon la revendication 2, caractérisée en ce que le circuit de contrôle comporte un circuit intégrateur commandant ledit temps de commutation dudit circuit de commutation.

5°/- Installation d'alimentation selon la revendication 4, caractérisée en ce que ledit circuit de contrôle comporte en outre un circuit comparateur assurant la formation d'une forme d'onde symétrique à l'entrée du circuit de commutation.

6°/- Installation d'alimentation selon la revendication 4, caractérisée en ce que le circuit intégrateur comprend une capacitance reliée à une résistance variable dont la valeur est réglée suivant la longueur de la section isolée dudit fil de garde.

7°/- Installation d'alimentation selon la revendication 5, caractérisée en ce que ledit circuit comparateur comprend un pont de diodes ayant en son intérieur un circuit d'avalanche et un condensateur monté en parallèle avec ce circuit d'avalanche pour filtrer les ondes transitoires.

8°/- Installation d'alimentation selon la revendi-

...

0005108

cation 2, caractérisée en outre par un circuit de détection de courant branché en série avec ladite lampe incandescente et connecté au circuit de contrôle, de sorte à déterminer le temps de commutation desdits moyens de commutation.

9°/- Installation d'alimentation selon la revendication 8, caractérisée en ce que ledit circuit de détection de courant comporte deux ponts de diodes et un ensemble de commutation à thyristors relié à ces deux ponts de diodes, de sorte à permettre l'alimentation de ladite lampe incandescente durant un temps déterminé par ledit circuit de contrôle desdits moyens de commutation, ledit circuit de détection de courant agissant en outre sur ledit circuit de contrôle, de sorte à avancer le temps de commutation desdits moyens de commutation en vue de dériver à la masse l'énergie extraite du fil de garde.

10°/- Installation d'alimentation selon la revendication 2, caractérisée en ce que lesdits moyens de commutation comprennent un thyristor bidirectionnel dont la gâchette est reliée audit circuit de contrôle, ledit thyristor étant monté en dérivation avec ledit moyen de transformation.

11°/- Installation d'alimentation selon la revendication 10, caractérisée en ce que lesdits moyens de commutation comportent en outre un élément de protection de surtension connecté en parallèle avec ledit thyristor et un élément résistif assurant un courant initial nul entre la cathode et la gâchette dudit thyristor bidirectionnel.

12°/- Installation d'alimentation selon la revendication 1, caractérisée en ce qu'une inductance de lissage est montée en série entre lesdits moyens de commutation et ledit moyen de transformation.

13°/- Installation d'alimentation selon la revendication 1, caractérisée en ce qu'un élément de protection est branché entre la section isolée du fil de garde et la masse, cet élément agissant comme parafoudre.

14°/- Procédé d'alimentation de balises à lampes incandescentes par une source d'énergie capacitive en provenance d'une

0005108

section du fil de garde d'une ligne de transport d'énergie, caractérisé en ce qu'on isole de la masse ladite section du fil de garde; on contrôle le débit de courant alimentant au moins une desdites lampes incandescentes à l'aide d'un circuit de commutation shunt, et on commande le temps d'enclenchement dudit circuit de commutation à l'aide d'un circuit intégrateur-comparateur.

15°/- Procédé d'alimentation selon la revendication 14, caractérisé en ce que, advenant un manque des lampes incandescentes, on actionne plus rapidement la commutation dudit circuit de commutation shunt de sorte à dériver·à la masse l'énergie extraite du fil de garde.

FIG. 1

FIG. 2